Europäisches Patentamt

European Patent Office

Office européen des brevets

(19)

(11) Veröffentlichungsnummer: **0 278 909 B1**

(12) **EUROPÄISCHE PATENTSCHRIFT**

(45) Veröffentlichungstag der Patentschrift:
13.11.91 Patentblatt 91/46

(51) Int. Cl.⁵: **B65G 47/29**

(21) Anmeldenummer: **88810067.4**

(22) Anmeldetag: **05.02.88**

(54) **Verfahren und Vorrichtung zum Vereinzeln, Behandeln und Weiterbefördern von Gebinden.**

(30) Priorität: **10.02.87 CH 486/87**

(43) Veröffentlichungstag der Anmeldung:
**17.08.88 Patentblatt 88/33**

(45) Bekanntmachung des Hinweises auf die
Patenterteilung:
**13.11.91 Patentblatt 91/46**

(84) Benannte Vertragsstaaten:
**AT CH DE ES FR GB IT LI SE**

(56) Entgegenhaltungen:
**DD-A- 93 118
DE-B- 1 549 171
GB-A- 1 366 420
US-A- 3 700 090**

(73) Patentinhaber: **KRÄMER AG**
**Grindelstrasse 23**
**CH-8303 Bassersdorf (CH)**

(72) Erfinder: **Krämer, Paul**
**Rebenstrasse 27**
**CH-8303 Birchwil (CH)**

(74) Vertreter: **Amsler, Martin et al**
**FELBER & PARTNER AG Dufourstrasse 116**
**CH-8008 Zürich (CH)**

**Beschreibung**

In einer Vielzahl von Betrieben werden heute Gebinde zu verschiedensten Zwecken auf Förderbahnen transportiert und verschoben. Bei solchen Gebinden kann es sich um Büchsen, Flaschen, Schachteln, Kisten, Harassen und ähnliche Behälter handeln. Uebliche Förderbahnen bestehen aus Förderbändern mit seitlichen Banden, die als Leitplanken wirken, sodass die Gebinde nicht von der Bahn rutschen können. Anstelle von Förderbändern sind auch Gleitflächen, Gleitschienen oder walzenförmige, freilaufende oder angetriebene Rollen als wesentliche Fördermittel einer solchen Förderbahn bekannt. Für verschiedene Behandlungen und Arbeiten, die an den beförderten Gebinden vorgenommen werden sollen, zum Beispiel deren Füllen, Wägen, Verschliessen, Beschriften, Etikettieren und dergleichen, müssen die in Reihe ankommenden Gebinde vereinzelt, angehalten und für die Weiterbeförderung wieder freigegeben werden. Anlagen für ein solches Vereinzeln, Anhalten, Behandeln und Weiterbefördern von Gebinden, die auf einer Förderbahn verschoben werden, sind grundsätzlich bekannt (siehe beispielsweise DE-B-1549171). Im allgemeinen sind solche Anlagen recht aufwendig konstruiert. So weisen sie zum Beispiel oft Greiferarme auf, die über eine komplizierte Steuerung die einzelnen Gebinde, die auf einer Förderbahn ankommen, packen und einer Maschine für eine bestimmte Bearbeitung hinstellen, um sie nach erfolgter Bearbeitung wieder auf die Förderbahn zurückzustellen. Gleichzeitig wird vor die auf der Förderbahn verbleibenden Gebinde ein Keil als Barriere geschoben, sodass diese Gebinde gewissermassen gestaut werden. Es sind auch Anlagen bekannt, die eine endlose Förderbahn umfassen und die Gebinde auf ein Karussell bringen, von wo einzelne Gebinde zu Bearbeitungszwecken entnommen werden, während die auf dem Karussell verbleibenden wieder zurück auf die Endlos-Förderbahn gebracht werden. In einer linearen Förderbahn erfolgt die Vereinzelung heute zum Beispiel, indem Keile als Barrieren zwischen die ankommenden Gebinde geschoben werden, wonach das vorderste jeweils weiterbefördert wird auf einen Bahnabschnitt ohne Förderantrieb. Dort kann eine Bearbeitung vorgenommen werden, wonach das Gebinde auf die anschliessend weiterführende Förderbahn geschoben wird.

Ein besonderes Problem bildet das Abfüllen von Gebinden nach Gewicht. Dazu ist es erforderlich, die abzufüllenden Gebinde auf eine Waage zu bringen und sie dort in Ruhelage zu halten, sodass sie abgefüllt und währenddessen gewogen werden können. Es versteht sich, dass hierzu die Verbindung zur Förderebene unterbrochen werden muss. Daher wird zu Wägzwecken meistens das Gebinde von der Förderbahn weggenommen und nach erfolgtem Auffüllen und Abwägen wieder auf die Bahn zurückgestellt. Diese Arbeit erfolgt manuell oder auch mittels eines Automaten.

Die bisher bekannten Anlagen zum Vereinzeln, Anhalten, Behandeln und Weiterfördern von Gebinden sind meist in Bezug auf ihre Technik recht aufwendig. Sie sind in der Folge teuer und aufgrund ihres komplizierten Aufbaus, der viele bewegliche, antreib- und steuerbare Teile umfasst, auch entsprechend störungsanfällig.

Die vorliegende Erfindung stellt sich zur Aufgabe, ein Verfahren zum Vereinzeln, Anhalten, Behandeln und Weiterbefördern von Gebinden zu schaffen, das insbesondere für die Anwendung in einer linearen Förderbahn geeignet ist. Das Verfahren soll einfacher im Ablauf, und die Vorrichtung zu dessen Ausübung in der Konstruktion einfacher, kostengünstiger und auch zuverlässiger arbeitend sein.

Diese Aufgabe wird gelöst von einem Verfahren zum Vereinzeln, Anhalten, Behandeln und Weiterbefördern von auf einer Förderbahn zugebrachten Gebinden, das sich durch die Verfahrensschritte des Patentanspruches 1 auszeichnet, und das von einer Vorrichtung mit den kennzeichnenden Merkmalen des Patentanspruches 2 ausgeübt wird.

In den Zeichnungen ist ein Ausführungsbeispiel einer Vorrichtung zur Durchführung des Verfahrens dargestellt.

Figur 1  zeigt die Vorrichtung im Betrieb in einem Längsschnitt mit dem Förderbahnabschnitt in mittlerer Schwenklage, bereit für den Verfahrensschritt a) ;

Figur 2  zeigt die Vorrichting mit dem Förderbanhabschnitt in oberster Schwenklage, kurz nach erfolgtem Verfahrenschnitt a) ;

Figur 3  zeigt die Vorrichtung mit dem Förderbahnabschnitt in unterster Schwenklage, kurz nach erfolgtem Verfahrensschritt b) und c), während dem Verfahrensschritt d) ;

Figur 4  zeigt die Vorrichtung erneut in mittlerer Schwenklage, bereit für den nächsten Verfahrenschritt a).

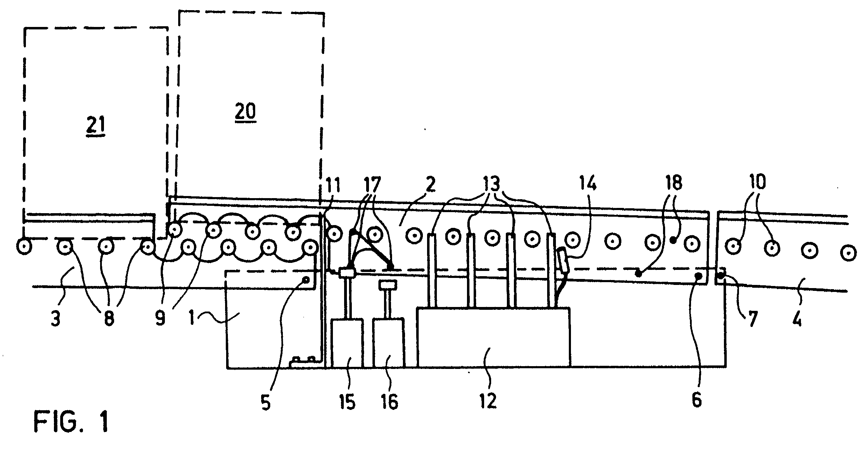

In Figur 1 ist die Ausgangslage für die erfindungsgemässen Verfahrensschritte, wie sie im Patentanspruch 1 umschrieben sind, gezeigt. Die Förderbahn 3, 4 ist unterbrochen und in den Unterbruch ist die Vorrichtung zur Ausübung des Verfahrens eingesetzt. Sie besteht hier aus einem Rahmen 1, an den mittels der Schwenkachse 6 ein spezieller Förderbahnabschnitt 2 schwenkbar angelenkt ist. Auch die Förderbahn 3, 4 ist an den Rahmen 1 über die Achsen 5 bzw. 6 angelenkt. Die Förderbahn 3, 4 wie auch der zur Ausübung des Verfahrens dienende Förderbahnabschnitt 2 sind im wesentlichen aus zwei längs der Förderbahn verlaufenden Profilen

2

aufgebaut, zwischen denen als Querverbindungen freilaufende, walzenartige Rollen 8, 9, 10 angeordnet sind, welche die Fördermittel bilden. Anstelle von Rollen könnte die Förderbahn 3, 4 auch ein Förderband aufweisen. Denkbar sind auch längs verlaufende Gleitschienen oder Förderketten, die auch für den Förderbahnabschnitt 2 in Frage kommen. Die Förderbahn 3, 4 ist in der Zeichnung von links nach rechts geneigt und für eine antriebslose Beförderung der Gebinde 20, 21, 22 usw. ausgelegt, die hier von links ankommen. Im Rahmen 1 ist ein als Anschlag 11 wirkendes Flachstahlstück in senkrechter Lage montiert, dessen oberes Ende die Förderebene in der untersten sowie in der mittleren Schwenklage des Förderbahnabschnittes 2 überragt. Im Rahmen 1 ist ferner das Behandlungsgerät 12 eingebaut, im gezeigtem Beispiel ist es eine Waage 12, die oben mit Rippen 13 ausgerüstet ist. Diese Rippen 13 können quer über die ganze lichte Breite des Förderbahnabschnittes 2 verlaufen. Sie bilden mit ihren Enden eine ebene, horizontal verlaufende Auflagefläche für das jeweils vereinzelte und zu wägende Gebinde. Die Waage 12 arbeitet vorzugsweise weglos, das heisst die Enden der Rippen 13 bleiben stets stationär. Am Rahmen 1 ist überdies ein Sensorgerät 14 montiert, welches auf photoelektrischem Weg als optischer Anschlag wirkt und das Vorhandensein eines Gebindes auf der Waage 12 registriert. Zwischen Waage 12 und Anschlag 11 sind hier zwei pneumatische Kolben-Zylinder-Einheiten 15, 16 im Rahmen 1 montiert. Zur Verstärkung und zur Erhöhung der Verwindungsstabilität des Förderbahnabschnittes 2 sind Stege 17, 18 eingebaut. Gleichzeitig dienen die Stege 17 als Angriffspunkte für die Kolben der pneumatischen Kolben-Zylinder-Einheiten 15 und 16. Im Folgenden soll nun der Ablauf des Verfahrens schrittweise erläutert werden.

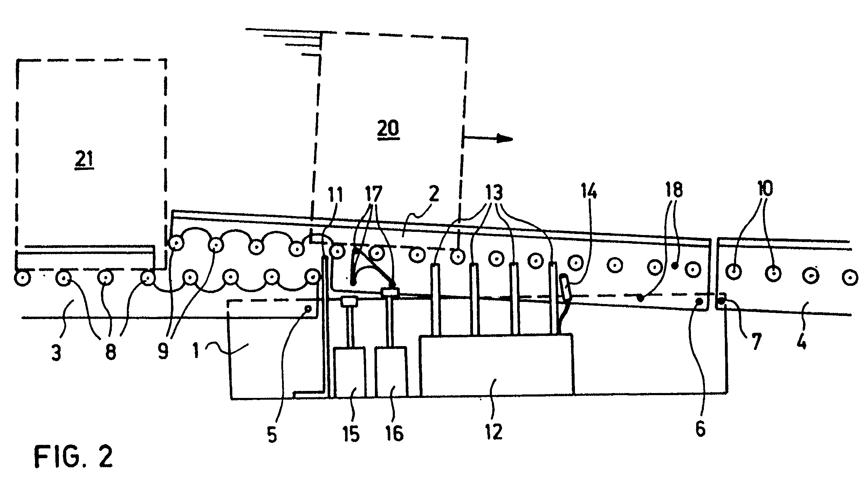

In Figur 1 ist wie erwähnt der Förderbahnabschnitt 2 in mittlerer Schwenklage dargestellt. Die von links ankommenden Gebinde 21, 22 fahren auf den Rollen 8 infolge der Neigung der Förderbahn 3 heran. Das Gebinde 20 wurde dabei in der vorhergehenden, untersten Schwenklage von den nachfolgenden Gebinden 21, 22 usw. auf den Förderbahnabschnitt 2 aufgeschoben, der mit der Förderbahn 3 etwas überlappt, bis es durch den Anschlag 11, der die Rollen 9 des Förderbahnabschnittes 2 dort überragt, gestoppt wurde. Diese Situation, bei der das erste Gebinde 20 bis zum Anschlag 11 vorgeschoben wurde und bereits in die mittlere Schwenklage angehoben wurde, ist in Figur 1 dargestellt. Die Gebinde 20, 21 und 22 sind dabei mit unterbrochen Linien eingezeichnet. Die äusserste Rolle des Förderbahnabschnittes 2 bildet für das Gebinde 21 einen Anschlag. Nun wird über eine nicht eingezeichnete, externe Steuereinheit, welche zuvor mittels einem Sensor 14 festgestellt hat, dass sich kein Gebinde über der Auflagefläche der Waage 12 befindet, die pneumatische Kolben-Zylinder-Einheit 15 betätigt. Der Kolben fährt unter pneumatischem Druck aus, bis sich die oberste Schwenklage des Förderbahnabschnittes 2 wie in Figur 2 dargestellt, einstellt (Verfahrensschritt a).

In dieser Position (Figur 2) des Förderbahnabschnittes 2 überragt der Anschlag 11 die Förderebene nicht mehr, und das Gebinde 20 wird freigegeben. Durch den aufgeschwenkten Förderbahnabschnitt 2 wird mit dessen äusserster Rolle bzw. Walze 9 indes immer noch ein Anschlag für das nächste Gebinde 21 gebildet. Weil der Förderbahnabschnitt 2 nun zudem eine erhöhte Neigung aufweist, beginnt das Gebinde 20 zu rollen, beschleunigt und fährt schliesslich in den Bereich über den Rippen 13 der Waage 12. Sobald das Gebinde diese Position eingenommen hat, wird es von einem Sensor 14 registriert (Verfahrensschritt b). Dieser Sensor 14 arbeitet vorteilhaft auf photoelektrischem Weg. Er ist hier am Rahmen 1 befestigt. Es sind jedoch auch mechanisch oder elektrisch arbeitende Sensoren denkbar. Mit der Feststellung durch den Sensor 14, dass ein Gebinde über den Rippen 13 angekommen ist, wird nun der Förderbahnabschnitt 2 rasch in die unterste Schwenklage abgeschwenkt (Verfahrensschritt c).

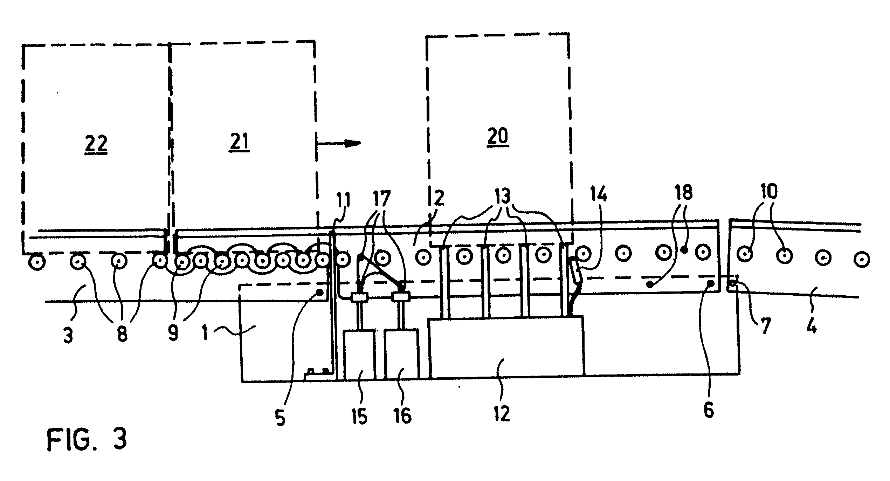

Dabei senken sich die Fördermittel des Förderbahnabschnittes 2, das heisst, dessen Rollen 9, zwischen die Rippen 13 der Waage 12 ab, wodurch das heranfahrende Gebinde 20 auf die Auflagefläche der Waage 12 aufgesetzt und natürlich gestoppt wird. Als Nächstes wird jetzt ein Bearbeitungsvorgang gestartet, wobei der Förderbahnabschnitt 2 immer noch in der untersten Schwenklage verharrt, wie das in Figur 3 dargestellt ist (Verfahrensschritt d). Dieses Starten kann eine externe Steuereinheit übernehmen, welche auch die Messwerte des Sensors 14 erhält. Neben dem Wägen kann eine solche Bearbeitung oder Behandlung zum Beispiel auch das Abfüllen, Verschliessen, Etikettieren, Beschriften oder dergleichen Arbeiten umfassen. Bei der vorliegenden Vorrichtung wird das Gebinde 20 gleichzeitig mit dem Abfüllen gewogen, da die Auflagefläche zu einer weglos arbeitenden Waage gehört bzw. mit ihr verbunden ist. Die Messdaten der Waage 12 werden nun ebenfalls an die externe Steuereinheit weitergegeben. In dieser Steuereinheit kann ein Sollwert für das Gewicht des Gebindes gespeichert sein. Wird nun das Gebinde zum Beispiel aufgefüllt, so nimmt das auf der Auflage ruhende Gewicht zu. Gleichzeitig mit dem Behandeln bzw. Wägen und Abfüllen des Gebindes 20 wird ein nächstes Gebinde 21 auf den in unterster Schwenklage befindlichen Förderbahnabschnitt 2 aufgefahren oder aufgeschoben, und zwar bis zum nun wieder über die Förderebene hinausragenden Anschlag 11, der so plaziert ist, dass das Gebinde um mindestens seinen halben Durchmesser auf den Förderbahnabschnitt 2 auffahr- oder aufschiebbar ist. Uebrigens überlappt der Förderbahnabschnitt 2 die zubringende Förderbahn 3 vorteilhaft um den Durchmesser der aufzufahrenden oder aufzuschiebenden Gebinde, indem zum Beispiel die Rollen von Förderbahnabschnitt 2 und Förderbahn 3 je in die Zwischenräume zwischen den Rollen des anderen Elemen-

3

tes zu liegen kommen, wie das hier gezeigt ist. Sobald nun der Sollwert für die Behandlung, hier z.B. ein vorgegebenes Gewicht, erreicht ist, stoppt die Steuereinheit den Füllvorgang und leitet den nächsten Schritt des erfindungsgemässen Verfahrens ein.

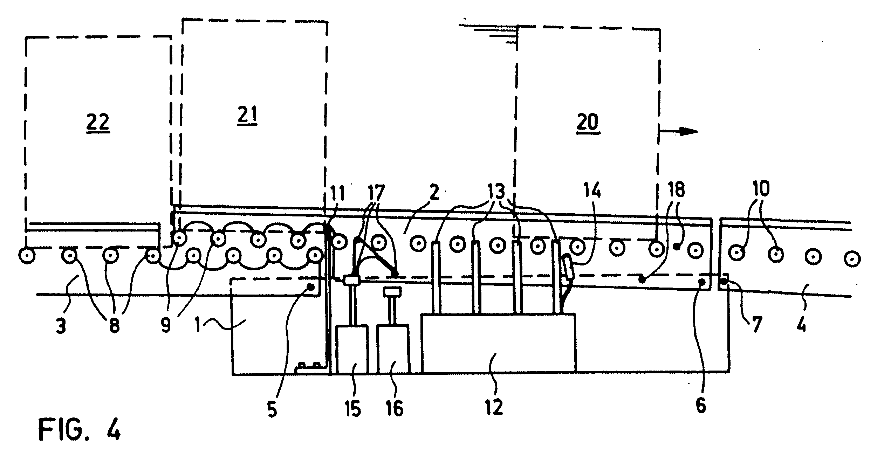

Dieser besteht in einem Aufschwenken des Förderbahnabschnittes 2 in die mittlere Schwenklage (Verfahrensschritt e). Im gezeigten Ausführungsbeispiel der Vorrichtung erfolgt das Aufschwenken wiederum mittels der Kolben-Zylinder-Einheit 16, die natürlich auch von der Steuereinheit gesteuert wird. Der Kolben fährt pneumatisch aus und schwenkt dadurch den Förderbahnabschnitt 2 hoch, bis die in Figur 4 gezeigte, mittlere Schwenklage erreicht ist. In dieser Position wird die durch die Rollen 9 gebildete Förderebene immer noch vom Anschlag 11 überragt, sodass dieser nun das Gebinde 21 zurückhält. Das Gebinde 20 wird durch das Aufschwenken in die mittlere Schwenklage von den Rippen 13 abgehoben und kann nun wieder frei weiterrollen. Es verlässt den Förderbahnabschnitt 2 und rollt auf die anschliessende Förderbahn 4 auf, die ihrerseits mit Fördermitteln, hier Rollen 10, ausgerüstet ist. Das Sensorgerät 14 stellt nun fest, dass das fertig behandelte bzw. abgefüllte Gebinde 20 den Bereich über der Auflagefläche der Waage 12 verlassen hat (Verfahrensschritt f). Nach einer vorprogrammierten Zeitspanne werden die Kolben der beiden pneumatischen Kolben-Zylinder-Einheiten 15, 16 voll ausgefahren, wodurch der Förderbahnabschnitt 2 in seine oberste Schwenklage zurückkehrt (Verfahrensschritt g, bzw. a).

Damit hat sich erneut die in Figur 1 dargestellte Situation eingestellt, und der Verfahrenszyklus beginnt von neuem wie beschrieben, entsprechend mit um Eins erhöhten Gebindenummern. Es versteht sich, dass anstelle von pneumatischen Kolben-Zylinder-Einheiten auch andere Mittel für das Auf- und Abschwenken des Förderbahnabschnittes 2 eingesetzt werden können. So kann zum Beispiel auch eine drehbare und mit Nocken versehene Welle zum Einsatz kommen, deren Nocken zwischen dem Rahmen und dem Förderbahnabschnitt angeordnet sind und beim Verdrehen der Welle wie Schlüssel wirken. Denkbar sind auch von oben her angreifende Seil- oder Kettenzüge, hydraulische Kolben-Zylinder-Einheiten oder ein Zahnstangengetriebe. Auch eine einzelne, zweistufig betätigbare, pneumatische oder hydraulische Kolben-Zylinder-Einheit kann das Auf- und Abschwenken besorgen. Die Mittel 13, welche die Ablagefläche des Behandlungsgerätes bilden und mit ihren oberen Enden die Ablageebene dieser Ablagefläche definieren, können Rippen, Stege, senkrechte Rohre oder Stäbe sein. Die Fördermittel 9 des Förderbahnabschnittes 2 müssen beim Abschwenken in die Zwischenräume zwischen diesen Mitteln 13 absenkbar sein.

Das erfindungsgemässe Verfahren zum Vereinzeln, Anhalten, Behandeln und Weiterbefördern von Gebinden, die auf einer Förderbahn 3 zugebracht werden, ist in seinem Ablauf bedeutend einfacher als bisher bekannte Verfahren. Die Vereinzelung erfolgt auf einem linear weitergeführten Abschnitt 2 der Förderbahn 3, 4. Die erfindungsgemässe Vorrichtung zur Ausübung dieses Verfahrens ist in ihrem Auf bau, ihrer Funktion und Steuerung denkbar einfach im Vergleich zu bestehenden Anlagen. Die Einfachheit Ihrer Konstruktion bietet auch Gewähr für eine optimale Betriebssicherheit und Dauerhaftigkeit der Vorrichtung.

## Patentansprüche

1. Verfahren zum Vereinzeln, Anhalten, Behandeln und Weiterfördern von auf einer Förderbahn zugebrachten Gebinden, wobei ein um eine Querachse zur Förderbahn in Gegen-Förderrichtung aufschwenkbarer Förderbahnabschnitt abwechslungsweise drei verschiedene Schwenklagen einnimmt und das Verfahren, ausgehend von der mittleren Schwenklage, folgende Schritte durchläuft :

a. Aufschwenken des Förderbahnabschnittes mit dem um mindestens seine halbe Dimension in Förderrichtung bis zu einem entsprechend ortsfest angeordneten Anschlag auf den Förderbahnabschnitt aufgefahrenen oder aufgeschobenen Gebinde in die oberste Schwenklage, bei der die durch die Fördermittel des Förderbahnabschnittes gebildete Förderebene den Anschlag überragt, wodurch das Gebinde zum Weiterrollen oder Weitergleiten freigegeben wird, bis es den Bereich über der Auflagefläche eines Behandlungsgerätes passiert und das nachfolgende Gebinde vom Förderbandsabschnittsende zurückgehalten wird ;

b. Feststellen des Vorhandenseins des Gebindes über der Auflagefläche des Behandlungsgerätes mittels eines Sensorgerätes ;

c. Abschwenken des Förderbahnabschnittes in die unterste Schwenklage, wobei das Gebinde auf die Auflagefläche des Behandlungsgerätes aufgesetzt wird, indem die Fördermittel des Förderbahnabschnittes zwischen die Mittel abgesenkt werden, welche mit ihren oberen Enden die Auflageebene der stationären Auflagefläche des Behandlungsgerätes definieren, sowie Stoppen des Gebindes durch dessen Aufsetzen ;

d. Behandeln des auf die Auflagefläche des Behandlungsgerätes aufgesetzten Gebindes bis zu einem vorgegebenen Sollwert und gleichzeitiges Auffahren oder Aufschieben eines nächsten Gebindes auf den Förderbahnabschnitt bis zum Anschlag ;

e. Aufschwenken des Förderbahnabschnittes in die mittlere Schwenklage, in welcher der Anschlag das aufgefahrene oder aufgeschobene Gebinde zurückhält, während gleichzeitig das nachfolgendes Gebinde vom Förderbahnabschnittsende zurückgehalten wird und das behandelte Gebinde durch das Aufschwenken des Förderbahnabschnittes und dessen Fördermittel von der Auflagefläche des Behandlungsgerätes weggehoben wird und zum Rollen oder Gleiten auf den Fördermitteln freigegeben wird, wodurch es vom Förderbahnabschnitt wegrollt oder weggleitet ;

f. Feststellen der Freigabe des Bereiches über der Auflagefläche des Behandlungsgerätes durch das den Förderbahnabschnitt eben verlassende, fertig behandelte Gebinde mittels einem Sensorgerät.

g. Verfahrensschritt a) mit in der Reihenfolge um Eins erhöhten Gebindenummern.

2. Vorrichtung zur Durchführung des Verfahrens nach Anspruch 1, dadurch gekennzeichnet, dass an einem festen Rahmen (1) ein Förderbahnabschnitt (2) um eine quer zur Förderrichtung liegende Achse (6) schwenkbar ist, dass am Rahmen (1) ein Anschlag (11) so befestigt ist, dass er die durch die Fördermittel (9) gebildete Förderebene des Förderbahnabschnittes (2) in Förderrichtung nach mindestens der halben Dimension in Förderrichtung eines aufzufahrenden oder aufzuschiebenden Gebindes in einer ersten, untersten und einer mittleren, geneigten Schwenklage der Förderbahn (2) überragt, dass in einer dritten, in Förderrichtung höchst geneigten Schwenklage des Förderbahnabschnittes (2) dessen Förderebene den Anschlag (11) dort überragt, dass in der ersten, untersten Schwenklage weiter in Förderrichtung die Förderebene überragt wird von Mitteln (13), deren obere Enden die Auflageebene der stationären Auflagefläche eines Behandlungsgerätes (12) bilden, das im Rahmen (1) im Bereich zwischen Anschlag (11) und Schwenkachse (6) angeordnet ist, dass in der zweiten, mittleren und in der dritten, höchsten Schwenklage des Förderbahnabschnittes (2) die Förderebene die Auflageebene des Behandlungsgerätes (12) und das Förderbahnabschnittsende die benachbarte Förderebene der Förderbahn (3) überragt, und dass Betätigungsmittel (15, 16) vorhanden sind, mittels denen der Förderbahnabschnitt (2) in die drei Schwenklagen schwenkbar und in diesen je fixierbar ist.

3. Vorrichtung nach Anspruch 2, dadurch gekennzeichnet, dass die Betätigungsmittel (15, 16) mindestens eine pneumatische Kolben-Zylinder-Einheit sind.

4. Vorrichtung nach Anspruch 2, dadurch gekennzeichnet, dass sie mit einem Sensorgerät (14) aufgerüstet ist, mittels welchem das Vorhandensein eines Gebindes über der Auflagefläche des Behandlungsgerätes (12) feststellbar ist.

5. Vorrichtung nach Anspruch 2, dadurch gekennzeichnet, dass das Behandlungsgerät (12) eine weglos arbeitende Waage ist.

6. Vorrichtung nach Anspruch 2, dadurch gekennzeichnet, dass die mit ihren oberen Enden die Auflageebene der Auflagefläche des Behandlungsgerätes (12) bildenden Mittel (13) zwischen den Fördermitteln (9) des Förderbahnabschnittes (2) angeordnete Rippen, Stege, senkrechte Rohre oder Stäbe sind.

## Claims

1. Process for the separation, stopping, handling, and further conveyance of containers brought to the device by a conveyor, characterized in that a conveyor segment rotating about a horizontal axis perpendicular to the axis of the conveyor can be swung up and down in three positions against the direction of conveyance, thus carrying out the following steps of the process :

(a) raising the conveyor segment in its uppermost position with a container advanced or pushed onto it by at least half the container's dimension in the direction of motion and up to a stop, by which raising motion the level of the means of conveyance of the conveyor segment is elevated over the level of the stop, thus allowing the container to roll or slide on to a position over the processing area of the handling device, and at the same time holding back the following container at a location preceding the conveyor segment;

(b) detecting the presence of the container over the processing area of the handling device by means of a sensor ;

(c) lowering the conveyor segment to its lowest position, by which lowering motion the level of the means of conveyance of the conveyor segment is brought below the level of the frame elements whose upper ends form the stationary processing area of the handling device, thus positioning the container onto the processing area of the handling device and stopping it by this touch-down ;

(d) handling the container set on the processing area of the handling device to a given state, and simultaneously pushing the next container onto the conveyor segment up to the stop ;

5

(e) raising the conveyor segment to its intermediate position, in which the stop still holds back the next container, thus simultaneously holding back the next container by the end of the conveyor segment and lifting the processed container from the processing area through the raising of the conveyor segment and its means of conveyance and allowing the container to roll or slide away from the conveyor segment;

(f) detecting the vacating of the processing area of the handling device by the processed container, by means of a sensor;

(g) step a) with the next container in the queue;

2. Device for implementing the process according to claim 1, wherein the device comprises a fixed frame (1); a conveyor segment (2) bearing on this frame (1) and which can be rotated about a horizontal axis (6) perpendicular to the axis of the conveyor; a stop (11) which is attached to the frame (1) in such manner as to protrude, at a location at least half the dimension of the container past the beginning of the conveyor segment in the direction of motion, over the means of conveyance (9) forming the plane of conveyance of the conveyor segment (2) when this conveyor segment (2) is in its first and lowest, and its second and intermediate, tilted positions, the stop (11) lying below the plane of conveyance of the conveyor segment (2) when this conveyor segment (2) is in its third, most strongly tilted position in the direction of motion; frame elements (13) whose upper ends form the processing plane of the stationary processing area of a handling device (12) located in the zone between the stop (11) and and the rotation axis (6), which upper ends of the frame elements (13) forming the processing area of the handling device (12) protrude over the plane of conveyance of the conveyor segment (2) when the latter is in its first, lowest position, and which upper ends of the frame elements (13) lie below the plane of conveyance of the conveyor segment (2) when the latter is in its second and intermediate, and its third and uppermost positions, in which position of the conveyor segment (2) its end protrudes over the plane of conveyance of the neighboring conveyor segment (3); and actuating mechanisms (15, 16) by means of which the conveyor segment (2) can be swung in its three positions and locked in these positions.

3. Device according to claim 2, wherein the actuating mechanisms (15, 16) comprise at least one pneumatic piston/cylinder unit.

4. Device according to claim 2, wherein the device is equipped with a sensor (14) by means of which the presence of a container over the processing area of the handling device (12) can be detected.

5. Device according to claim 2, wherein the handling device (12) is a displacement-free scale.

6. Device according to claim 2, wherein the frame elements (13) located between the means of conveyance (9) of the conveyor segment (2), and whose upper ends form the processing area of the handling device (12), consist of ribs, stays, vertical pipes or rods.

## Revendications

1. Procédé visant à séparer, arrêter, conditionner et réexpédier des emballages apportés sur un chemin de transport, caractérisé par le fait qu'un tronçon du chemin de transport pivotant sur un axe perpendiculaire au chemin de transport prend alternativement trois positions différentes, et que le procédé, en partant de la position moyenne, passe par les étapes suivantes :

a) élévation dans la position haute du tronçon du chemin de transport portant l'emballage qui y est transporté ou poussé d'au moins la moitié de sa dimension dans la direction du déplacement jusqu'à un butoir fixe, position dans laquelle la plan de transport formé par les moyens de transport du tronçon du chemin de transport dépasse en hauteur le butoir, ce qui permet à l'emballage de continuer de rouler ou de glisser jusqu'à ce qu'il traverse le champ situé sur la surface portante d'un appareil de conditionnement, l'emballage suivant étant alors retenu par l'extrémité du tronçon du chemin de transport ;

b) constatation de la présence de l'emballage sur la surface portante de l'appareil de conditionnement au moyen d'un capteur ;

c) abaissement du tronçon du chemin de transport dans la position basse, l'emballage étant ainsi arrêté et posé sur la surface portante de l'appareil de conditionnement par l'abaissement des moyens de transport du tronçon du chemin de transport entre les moyens dont les extrémités supérieures forment le plan de portée de la surface portante stationnaire de l'appareil de conditionnement ;

d) conditionnement de l'emballage posé sur la surface portante de l'appareil de conditionnement jusqu'à une valeur prescrite tandis qu'est transporté ou poussé l'emballage suivant sur le tronçon du chemin de transport jusqu'au butoir ;

e) élévation du tronçon du chemin de transport dans la position moyenne où le butoir retient l'emballage transporté ou poussé pendant que l'emballage suivant est retenu par l'extrémité du tronçon du chemin

6

de transport, cette élévation faisant que l'emballage conditionné est enlevé de la surface portante de l'appareil de conditionnement et qu'il peut continuer de rouler ou de glisser sur les moyens de transport, quittant ainsi le tronçon du chemin de transport ;

f) constatation, au moyen d'un capteur, de la libération du champ situé sur la surface portante de l'appareil de conditionnement par l'emballage conditionné quittant le tronçon du chemin de transport.

g) Etape a) avec des numéros d'emballages plus grands de un.

2. Appareil destiné à appliquer le procédé selon la revendication 1, caractérisé par le fait qu'un tronçon du chemin de transport (2), monté sur un châssis (1) fixe, pivote autour d'un axe (6) situé perpendiculairement à la direction du transport, qu'un butoir (11) est fixé sur le châssis (1) de telle façon que, dans les positions basse et moyenne du chemin de transport (2), il dépasse en hauteur le plan de transport du tronçon du chemin de transport (2) formé par les moyens de transport (9) dans la direction du déplacement, ce butoir (11) étant situé dans cette direction à une distance d'au moins la moitié de la dimension d'un emballage à transporter ou à pousser, tandis que, en position haute, le plan de transport du tronçon du chemin de transport (2) dépasse en hauteur le butoir (11), ce plan de transport, en position basse, étant lui-même dépassé en hauteur par les moyens (13) dont les extrémités supérieures forment le plan de transport de la surface portante stationnaire d'un appareil de conditionnement (12) gui est monté dans l'espace séparant le butoir (11) de l'axe de pivotement (6), situé dans le châssis (1), l'appareil étant également caractérisé par le fait que, dans les positions moyenne et haute du tronçon du chemin de transport (2), le plan de transport dépasse en hauteur le plan de portée de l'appareil de conditionnement (12) et l'extrémité du tronçon du chemin de transport (2) dépasse en hauteur le plan de transport du chemin de transport (3) précédent, et que des moyens d'action (15, 16) permettent de faire pivoter et de fixer le tronçon du chemin de transport (2) dans les trois positions.

3. Appareil selon la revendication 2, caractérisé par le fait que les moyens d'action (15, 16) se composent d'au moins un organe à cylindres et à pistons.

4. Appareil selon la revendication 2, caractérisé par le fait qu'il équipé d'un capteur (14) qui permet de constater la présence d'un emballage sur la surface portante de l'appareil de conditionnement (12).

5. Appareil selon la revendication 2, caractérisé par le fait que l'appareil de conditionnement (12) se compose d'une balance fixe.

6. Appareil selon la revendication 2, caractérisé par le fait que les moyens (13) situés entre les moyens de transport (9) du tronçon du chemin de transport (2) et dont les extrémités supérieures forment le plan de portée de la surface portante de l'appareil de conditionnement (12) sont des barres de châssis, des traverses, des tuyaux ou des branches verticaux.

FIG. 1

21

20

11  17  2  13  14  18  10

3  8  9  1

5  15  16  12  6  7  4

EP 0 278 909 B1

8

FIG. 2

FIG. 3

10

FIG. 4

EP 0 278 909 B1